# EUROPEAN PATENT SPECIFICATION

(11) **EP 1 468 002 B1**
(45) Date of publication and mention of the grant of the patent: **30.08.2006**
(21) Application number: 03700887.7
(22) Date of filing: 16.01.2003
(51) Int. Cl.: C07F 3/00, C07F 3/02

(54) **COORDINATION COMPLEX**
KOORDINATIONSKOMPLEX
COMPLEXE DE COORDINATION

(30) Priority: 18.01.2002 GB 0201141
(43) Date of publication of application: 20.10.2004
(73) Proprietor: IMPERIAL COLLEGE INNOVATIONS LIMITED, London SW7 2QA (GB)
(72) Inventor: MARSHALL, Edward, Croydon Surrey CR0 3JY (GB); SEGAL, John, Welwyn Garden City Hertfordshire AL7 4QB (GB); GIBSON, Vernon, Charles, London SW7 2QA (GB)
(74) Representative: Clyde-Watson, Zöe
(86) International application number: PCT/GB2003/000163
(87) International publication number: WO 2003/062249

(56) References cited:
- EP-A- 0 747 405
- GIBSON, VERNON C. ET AL: "Novel Mono-alkyl Magnesium Complexes Stabilized by a Bulky.beta.-Diketiminate Ligand: Structural Characterization of a Coordinatively Unsaturated Trigonal System" JOURNAL OF THE AMERICAN CHEMICAL SOCIETY (2000), 122(29), 7120-7121, XP002234846
- WEEBER, ARMIN ET AL: "Homoleptic and Heteroleptic Barium Benzyl Complexes: Synthesis and Reactivity as Initiators for Anionic Styrene Polymerizations" ORGANOMETALLICS (2000), 19(7), 1325-1332, XP000920607
- DATABASE CA [Online] CHEMICAL ABSTRACTS SERVICE, COLUMBUS, OHIO, US; RAMIREZ, FAUSTO ET AL: "Preparative chemistry of organic magnesium oxyanion complexes. 5. Aroxide complexes" retrieved from STN Database accession no. 91:32007 XP002234848 & SYNTHESIS (1979), (1), 71-4,
- DATABASE CROSSFIRE BEILSTEIN [Online] Beilstein Institut zur Förderung der Chemischen Wissenschaften, Frankfurt am Main, DE; Tetrahedron, 53; 22; 7671-7688, 1997 DESIMONI, G. ET AL.: Database accession no. BRN 7792064 XP002234867
- ZHONG, ZHIYUAN ET AL: "A Novel and Versatile Calcium-Based Initiator System for the Ring-Opening Polymerization of Cyclic Esters" MACROMOLECULES (2001), 34(12), 3863-3868, XP002234847
- XVIIth International Conference on Organometallic Chemistry; Munich, August 16-21, 1998, Part 1 Poster Session A; D.Schramm, W.Kläui "Synthesis of Cationic Hydrotris(pyrazolyl)borate Zirconium Compounds" XP002249590
- COTTON; WILKINSON: 'Anorganische Chemie', 1985, VCH * page 287 *

## Description

The present invention relates to a series of discrete, well-defined coordination complexes. More specifically, the invention concerns the use of Group 2 metal complexes in the controlled polymerisation of acrylate and alkylmethacrylate monomers.

Over recent years, an important technological objective has been the controlled, 'living' polymerisation of acrylate and alkylmethacrylate monomers to give products of controlled molecular weight and molecular weight distribution, and to provide access to block co-polymer materials. Examples of controlled or 'living' polymerisations include anionic polymerisation [C. Zune, R. Jérôme, Prog. Polym. Sci., 1999, 24, 631], group transfer polymerisation [O.W. Webster, W.R. Hertler, D.Y. Sogah, W.B. Farnham, T.V. Rajanbabu, J. Am. Chem. Soc., 1983, 105, 5706], atom transfer radical polymerisation [K. Matyjaszewski, J. Xia, Chem. Rev., 2001, 101, 2921], immortal polymerisation [T. Aida, S. Inoue,- Acc. Chem. Res., 1996, 29, 39], catalytic chain transfer polymerisation [T.P. Davis, D.M. Haddleton, S.N. Richards, J. Macromol. Sci. Rev. Macromol. Chem. Phys., 1994, C34, 243], screened anionic polymerisation [D.G.H. Ballard, R.J. Bowles, D.M. Haddleton, S.N. Richards, R. Sellens, D.L. Twose, Macromolecules, 1992, 25, 5907] and metal-free anionic polymerisations [M.T. Reetz, Angew. Chem., Int Ed. Engl. 1988,27,994].

Stereospecific polymers can exist in two different forms, isotactic and syndiotactic, as shown below.

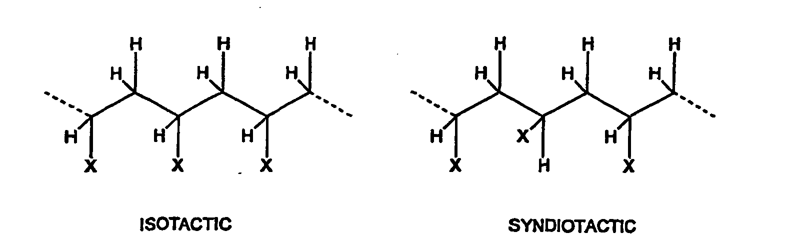

By way of contrast, an atactic polymer is one that has no regular arrangement along the chain.

Another important objective in the field of polymer chemistry has been to develop systems that can control the tacticity of products such as polymethylmethacrylate under industrially relevant process conditions. For example, the higher softening temperature accompanying highly syndiotactic polymethylmethacrylate confers beneficial properties on the resultant materials. Examples include s-PMMA for injection molding, artificial marble pre-mixes, stereocomplexes for preparing membranes and/or gel base materials, and syndiotactic-isotactic block PMMA for forming resist patterns.

To date, a number of systems have been described that can effect syndiotactic control in polymethylmethacrylate. These include organolanthamides [H. Yasuda, R Yamamoto, K. Yokota, S. Miyake and A. Nakamura, J. Am. Chem. Soc., 1992, 114, 4908; M. Nodono, T. Tokimitsu, S. Tone, T. Makino and A. Yanogase, Macromol. Chem. Phys., 2000, 201, 2282], zirconocenes [A.D. Bolig and E. Y.-X. Chen, J. Am. Chem. Soc., 2001, 123, 7943] aluminium compounds [T. Kitayama, T. Shinozaki, T. Sakamoto, M. Yamamoto and K. Hatada, MakromoL Chem. Suppl. 1989, 15, 167; G.L.N. Péron, R.J. Peace and AJ. Hohnes, I. Maw. Chem., 2001, 11, 2915], magnesium compounds [T.Kitayama, T.Shinozaki, E. Masuda, M. Yamamoto and K. Hatada, Polym. BulL, 1988, 20, 565] and enamine initiators [M. Miyamoto and S. Kanetaka, J. Polym. Sci.: Part A: Polym. Chem., 1999, 37, 3671]. Most of these systems are accompanied by one or more limitations: either exceptionally low temperatures (e.g. -78°C or below) are required to obtain high syndiotacticity, and/or the molecular weight control over the resultant product is poor.

D. Schramm and W. Klaui disclosed cationic hydrotris(pyxazolyl)borate zirconium compounds at the XVIIIth International Conference on Organometallic Chemistry (Munich, 16-21 August 1998, Part 1 Poster Session). The Lewis acidity of Tp*ZrCl₂(CF₃SO₃) (Tp* = HB(3,5-Me₂ₚz)₃) was estimated by treatment with propylene oxide.

The present invention thus seeks to provide a series of discrete, well-defined coordination complexes that are useful as initiators in the polymerisation of alkylacrylate and/or alkylmethacrylate monomers. More specifically, the invention seeks to provide coordination complexes that are capable of influencing and/or controlling the syndiotacticity of the resulting polymer but which alleviate some of the above-mentioned problems associated with prior art complexes,

In a first aspect, the invention provides a complex of formula I 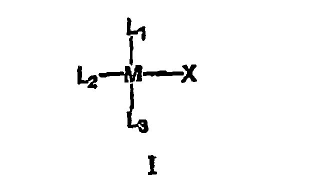 wherein
M is Ca, Mg, Ba or Sr;
L₁ is selected from R¹O, R²S, R³R⁴N, R⁵R⁶P, a substituted or unsubstituted cyclopentadienide, and a substituted or unsubstituted pyrazolyl group, where R¹⁻⁶ are each independently H or hydrocarbyl;
L₂ is selected from R⁷R⁸O, R⁷R⁸S, R⁷R⁸R⁹N, R⁷R⁸C=NR⁹, PR⁷R⁸R⁹, and a substituted or unsubstituted heterocycle containing one or more O, N or S atoms, where R⁷⁻⁹ are each independently H or a hydrocarbyl group;
L₃ is a neutral ligand as defined for L₂, wherein L₃ may be the same or different to L₂; and wherein L₁, L₂ and L₃ are linked to form a tridentate ligand; and
X is an alkyl group, an aryl group, an amide group, an aryloxide or an enolate group of formula R¹⁰R¹¹C=CR¹²O-, wherein R¹⁰⁻¹² are each independently H or hydrocarbyl;

Thus, where L₁ is a substituted or unsubstituted cyclopentadienide, this refers to a monoanionic substituted or unsubstituted cyclopentadiene nucleus which complexes to the metal M. Likewise, where L₁ is a substituted or unsubstituted pyrazolyl group, this refers to a monoanionic pyrazole nucleus. Preferably, the monoanionic pyrazole nucleus complexes to the metal, M, through one of the nitrogen atoms.

As used herein, the term "hydrocarbyl" refers to a group comprising at least C and H that may optionally comprise one or more other suitable substituents. Examples of such substituents may include halo-, alkoxy-, nitro-, an alkyl group, or a cyclic group. In addition to the possibility of the substituents being a cyclic group, a combination of substituents may form a cyclic group. If the hydrocarbyl group comprises more than one C then those carbons need not necessarily be linked to each other. For example, at least two of the carbons may be linked via a suitable element or group. Thus, the hydrocarbyl group may contain heteroatoms. Suitable heteroatoms will be apparent to those skilled in the art and include, for instance, sulphur, nitrogen, oxygen, phosphorus and silicon.

Preferably, M is Ca or Mg.

In a preferred embodiment, R¹ and R² are each independently hydrocarbyl, and R³⁻⁶ are each independently H or hydrocarbyl.

In a particularly preferred embodiment, R¹ and R² are each independently selected from branched or unbranched alkyl, branched or unbranched alkenyl, or aryl, each of which may be substituted or unsubstituted. Suitable substituents include, for example, alkyl, halo-, alkoxy-, nitro-, or a cyclic group.

As used herein, the term "alkyl" refers to a saturated carbon-containing chain which may be straight or branched, and substituted (mono- or poly-) or unsubstituted. Suitable substituents include those which do not have any significant adverse effect on the activity of the complex and may include, for example, halo-, alkoxy-, nitro-, or a cyclic group.

Preferably, the alkyl group is a C₁₋₂₀ alkyl group, more preferably a C₁₋₁₀ alkyl group.

Accordingly, the term "haloalkyl" refers to an alkyl group substituted by at least one halogen, for example, chlorine, bromine, fluorine or iodine.

Accordingly, the term "heteroalkyl" refers to an alkyl group containing at least one heteroatom, for example, O, N or S.

As used herein, the term "alkenyl" refers to a C₂₋₂₀ unsaturated carbon-containing chain which may be branched or unbranched, and substituted (mono- or poly-) or unsubstituted. Preferably the alkenyl group is a C₂₋₁₀ alkenyl group.

As used herein, the term "aryl" refers to a C₆₋₁₀ aromatic, substituted (mono- or poly-) or unsubstituted. Again, suitable substituents include those which do not have any significant adverse effect on the activity of the complex and may include, for example, alkyl, halo-, alkoxy-, nitro-, or a cyclic group.

As used herein, the term "cycloalkyl" refers to a cyclic alkyl group which may be substituted (mono- or poly-) or unsubstituted.

As used herein, the term "heterocycle" refers to an aromatic or non-aromatic heterocycle comprising one or more heteroatoms. Preferred heterocycle groups include pyrrole, pyrazole, pyrimidine, pyrazine, pyridine, quinoline, thiophene and furan.

In one preferred embodiment, X is an alkyl group. In an especially preferred embodiment, X is ⁱPr.

In another preferred embodiment, X is an amide group. Even more preferably, X is NPrⁱ₂.

In another preferred embodiment, X is an enolate group of formula R¹⁰R¹¹C=CR¹²O-, wherein R¹⁰⁻¹² are each independently H or hydrocarbyl. Preferably, R¹⁰ and R¹¹ are H and R¹² is an aryl group.

In one particularly preferred embodiment, X is -OC (=CH₂)Ar, wherein Ar = 2,4,6,-Me₃C₆H₂.

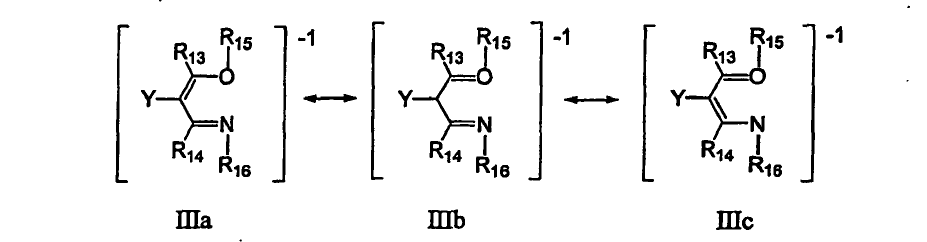

Likewise, the skilled person will appreciate that ligands of formula II will have an overall charge of -1 and may exist in one or more of the isomeric forms shown below, or mixtures thereof, or a hybrid thereof in which the electrons are delocalised throughout the whole ligand system.

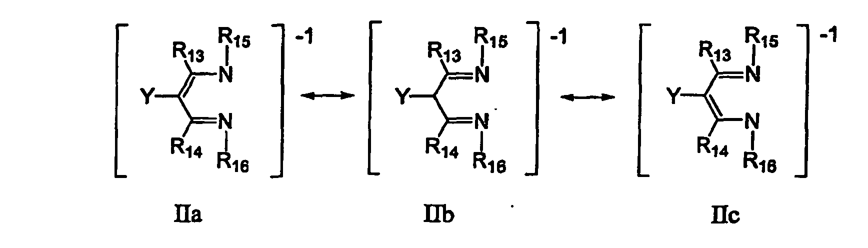

As used herein, and throughout the accompanying claims and Examples, the shorthand representation of the di-imine isomer IIb, {YC(C(R')=N-R")₂}, is used for simplicity to represent all of the above isomeric forms of ligand II, in the case where R¹³ and R¹⁴ are the same (represented as R') and R¹⁵ and R¹⁶ are the same (represented as R").

In a more preferred embodiment, where the complex of the invention is of formula II or III, Y is selected from H, halogen, NO₂, CN, alkyl, aryl, haloalkyl or heteroalkyl;
R¹³⁻¹⁶ are each independently selected from alkyl aryl, heteroalkyl, haloalkyl, cycloalkyl and a heterocyclic ring containing at least one O, N or S atom; or Y and R¹³ are linked to form an aryl group; and L₃ is selected from R⁷R⁸O, R⁷R⁸S, R⁷R⁸R⁹N, R⁷C=NR⁸, PR⁷R⁸R⁹, thiophene and tetrahydrofuran, where R⁷⁻⁹ are each independently H or a hydrocarbyl group.

In a particularly preferred embodiment, L₁, L₂ and L₃ are licked to form a tridentate ligand selected from a beta-diketiminate with a pendant donor group, a Schiff base derivative with a pendant donor arm, and a tris(pyrazolyl)borate ligand.

Even more preferably, the complex of the invention is of formula 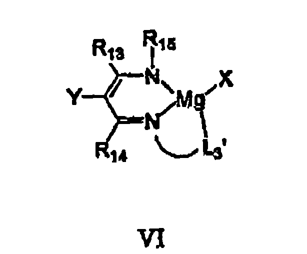 wherein Y is H, hydrocarbyl or CN; R¹³⁻¹⁵ are each independently selected from H and hydrocarbyl; or Y and R¹³ are linked to form a hydrocarbyl group; L₃ is defined as for L₃ above, and is linked to the nitrogen of the bidentate ligand via a linker group. More preferably, the linker group is an aryl group.

In one particularly preferred embodiment, L₃, is an alkoxy group. Even more preferably, the alkoxy group L₃, is attched to an aryl linker group.

In the case where the complex is of formula YI, preferably Y is II, R¹³ and R¹⁴ are both methyl R¹⁵ is aryl (preferably 2,6-diisopropylphenyl) and X is isopropyl

In an a1temative preferred embodiment, the GOD4:lcx of the invention is of:tnmml81 vn 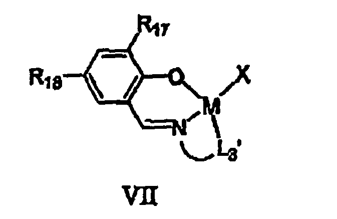 wherein L₃' is defined as for L₃ above, and is linked to the nitrogen of the bidentate ligand via a linker group, and R¹⁷⁻¹⁸ are each independently selected from H and hydrocarbyl.

Preferably, where the complex is of formula VI or VII, the linker group is (CH₂)ₙ where n is 0-6, an arylene group, or SiR₂, where R is a hydrocarbyl group.

In another preferred embodiment of the invention, L₁, L₂ and L₃ are linked to form a ris(pyrazolyl)borate ligand which complexes to metal M as shovm below, where each R is independently H or a hydrocarbyl group.

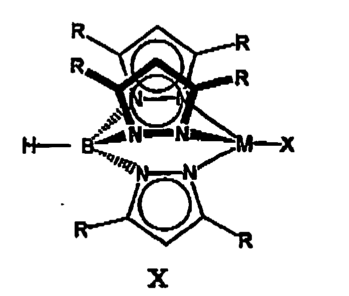

The tris(pyrazolyl)borate ligand has an overall charge of -1, i.e., one of the pyrazolyl groups bonds to the metal M as a monoanionic ligand (L₁), whereas the remaining two pyrazolyl groups (L₂, L₃) complex to metal M as neutral ligands. However, the skilled artisan will appreciate that the electrons in the above tris(pyrazolyl)borate complex are delocalised throughout the whole system.

In one prefened embodiment, the invention comprises a dimer of a complex as described hereinbefore, or higher nuclearity aggregates.

In an especially preferred embodiment, the complex of the invention is selected form the following:
{HC(C(Me)=N-2,6-ⁱPr₂C₆H₃)(C(Me)=N-2-OMeC₆H₄))MgⁱPr[5] and
{HB(3,5-Me₂C₃N₂H)₃}Mg(OC(=CH₂)-2,4,6-Me₃C₆H₂)[6];

In a second aspect, the invention relates to the use of a complex of formula Ia as a polymerisation initiator, 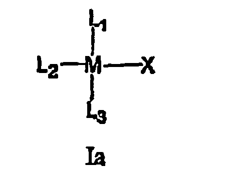 wherein
M is Ca, Mg, Ba or Sr;
L₁ is selected from R¹O, R²S, R³R⁴N, R⁵R⁶P, a substituted or unsubtistuted cyclopentadienide, and a substituted or unsubstituted pyrazolyl group, where R¹⁻⁶ are each independently H or hydrocarbyl;
L₂ is selected from R⁷R⁸O, R⁷R⁸S, R⁷R⁸R⁹N, R⁷R⁸C=NR⁹, PR⁷R⁸R⁹, and a substituted or unsubstituted heterocycle containing one or more O, N or S atoms, where R⁷⁻⁹ are each independently H or a hydrocarbyl group;
L₃ is a neutral ligand as defined for L₂, wherein L₃ may be the same or different to L₂; and wherein L₁, L₂ and L₃ are linked to form a tridentate ligand; and
X is an alkyl group, an aryl group, an amide group, or an enolate group of formula R¹⁰R¹¹C=CR¹²O-, wherein R¹⁰⁻¹² are each mdepeodeatty H or hydrocarby.;

Preferably, M is Ca or Mg.

The prefmed embodiment for the second aspect of the invention arc identical to those described hereinabove for the first aspect.

In a preferred embodiment, the invention relates to the use of a complex of formula la in the polymerisation of acrylate and/or alkylacrylate monomen. In particular, the complexes of the present invention are capable of influencing the tacticity of the resulting polymer. More specifically, the complexes of the invention are capable of inducing a high degree of syndiotacticity in the resulting polymer.

As used herein, the term "acrylate monomer" refers to an acrylate monomer which is optionally substituted by one or more hydrocarbyl groups as defined hereinabove.

Similarly, the term "alkylacrylate monomer" refers to an alkylacrylate monomer which is optionally substituted by one or more hydrocarbyl groups as defined hereinabove.

Preferably, said acrylate and alkylacrylate monomers are substituted by branched acyclic and cyclic hydrocarbons and/or functionalised substituents such as hydroxyalkyl, glycidyl and glycolethers.

In one preferred embodiment, the acrylate monomer is an alkylacrylate.

In another preferred embodiment, the alkylacrylate monomer is an alkylmethacrylate.

One preferred embodiment relates to the use of complexes in accordance with the second aspect of the invention as initiators in the preparation of block copolymers. By way of example, said complexes may be used in the preparation of a block copolymer of methyl methacrylate and n-butyl methacrylate. Further details of this aspect of the invention are provided in the accompanying examples section.

In a third aspect, the invention provides a process for the polymerisation of acrylate and/or alkylacrylate monomers, said process comprising contacting an initiating amount of a complex of formula Ia as defined above with an acrylate and/or an alkylacrylate monomer in the presence of a suitable solvent.

In a preferred embodiment, the invention provides a polymerisation process for preparing a block copolymer, for example, a block copolymer of methyl methacrylate and n-butyl methacrylate.

In a further preferred aspect, the polymerisation takes place in the presence of a chain transfer reagent

Preferably, the chain transfer reagents have an acidic proton in the alpha position to a carbonyl group and are of the formula Z-CH₂-C(=O)-R^{"}, wherein R^{"} is H, alkyl or aryl, and Z is selected from aryl, alkyl, H, amino, alkylamino, acyl, alkoxy (OR), thiol (SR) or heterocycle, where R is ahydrocatbyl group.

An example of a chain transfer reagent in which Z is aryl is 2',4',6'-trimethylacetophenone. Examples of chain transfer reagents in which Z is alkylamino include amino methyl ketones and amino ethyl ketones. An example of a chain transfer reagent in which Z is acyl is 2,4-pentanedione, i.e. Z is C(=O)CH₃ and R³⁸ is CH₃.

Other suitable chain transfer reagents are known in the literature and will be apparent to the person skilled in the relevant art.

Preferably, the ratio of monomer to the complex in the above process is between 10:1 to 10⁶:1.

A fourth aspect of the invention provides an article prepared by the above-described process.

A fifth aspect of the invention provides a composition composing an acrylate and/or an alkylacrylate monomer and a complex of formula Ia as defined above.

A sixth aspect of the invention provides a composition comprising poly(alkylacrylate) and/or poly(alkylmethacrylate) or co-polymers thereof, and a complex of formula Ia as defined above.

A seventh aspect of the invention provides a method for producing poly(alkylacrylate) or poly(alkylmethacrylate) having a syndiolacticity of greater than 75%, and preferably greater that 85% said method comprising contacting the corresponding monomer (alkyl acrylate, or alkymethacrylate, or mixtures thereof) with a complex of formula Ia as defined above in a suitable solvent.

Preferably, said method is carried out at a temperature in excess of -40°C.

Thus, in one particularly preferred embodiment, the complex of the invention is capable of affording polymethylmethacrylate with greater than 90% syndiotacticity in a highly controlled manner at a temperature in excess of -40°C.

The invention is further described by way of example and with reference to the following figures wherein:

### EXAMPLES

### Example 12

### Synthesis of {HC(C(Me)=N-2,6-ⁱPr₂C₆H₃)(C(Me)=N-2-OMeC₆H₄)}MgⁱPr [5]

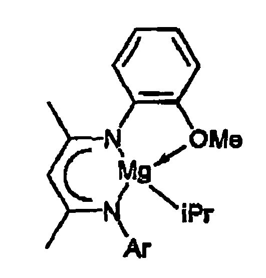

Ar=2,6-ⁱPr₂C₆H₃

"Butyl lithium (2.70 mL, 2.5M in hexanes. 6.75 x 10⁻³mol) was added slowly to a stirred solution of {H₂C(C(Me)=N-2,6-ⁱPr₂C₆H₃)(C(Me)=N-2-OMeC₆H₄)} (2.46 g, 6.75 x 10⁻³mol) in 25 mL toluene at 0°C. The solution was stirred for 24 hours before addition of ⁱPrMgCl (3.37cm³, 2.0M in Et₂O, 6.74 x 10⁻³mol) at 0°C. The solution was then stirred for a further 18 hours at ambient temperature. Concentration of the solution under reduced pressure afforded an orange solid (2.1 g, 4.98 x 10⁻³mol, 73.9 %).
¹H NMR (C₆D₆): δ 6.87, 6.79, 6.48 (m, 7H, Ar*H*), 4.90 (s, 1H, *H*C{C(CH₃)NAr}₂), 3.32 (s, 3H, ArOC*H*₃), 3.20 (sept, 1H, ³J_{HH} = 6.86 Hz, ArC*H*Me₂), 1.92 (s, 3H, HC{C(C*H*₃)NAr}₂), 1.68 (s, 3H, HC{C(C*H*₃)NAr}₂), 1.24 (d, 6H, ³J_{HH} = 6.44 Hz, ArCH(C*H*3)₂), 1.23 (d, 6H, ³J_{HH} = 7.86 Hz, MgCH(C*H*₃)₂), 1.16 (d, 6H, ³J_{HH} = 6.83 Hz, ArCH(C*H*₃)₂), 0.07 (sept, 1H, ³J_{HH} = 7.83 Hz, MgC*H*Me₂).

### Example 13

### Use of {HC(C(Me)=N-2,6-ⁱPr₂C₆H₃)(C(Me)=N-2-OMeC₆H₄}MgⁱPr [5] as an MMA polymerisation initiator

In toluene at -30°C, 200 equivalents MMA attains a conversion of 74% after 120 seconds.
Mₙ = 24,677 (Mₙ calc =14,800), M_{w}/Mₙ =1.20
Syndiotactic content (% rr triad) = 85%

### Example 14

### Synthesis of {HB(3,5-Me₂C₃N₂H)₃}Mg(OC(=CH₂)-2,4,6-Me₃C₆H₂₎[6]

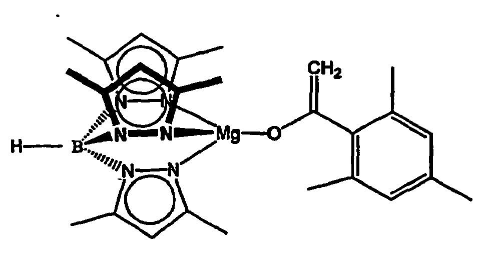

*Potassium tris(3,5-dimethylpyrazolyl)borate (0.8945g, 2.66 x 10⁻³mol) was suspended in 20cm³ THF. 1.36cm^{3 i}PrMgCl (2.0M in Et₂O, 2.72 x 10⁻³mol, 1.02 equivalents) was added via syringe at room temperature and the resultant white suspension was stirred for 6 hrs at 60°C. The reaction mixture was then allowed to cool to room temperature before a 10cm³ THF solution of 0.4401 g 2',4',6'-trimethylacetophenone (2.71 x 10⁻³ mol, 1.02 equivalents) was added dropwise over 2 minutes. The reaction was stirred at room temperature for 16 hours, filtered and concentrated to a white solid. This was washed with 5 cm³ cold pentane (-78°C) and dried in vacuo to afford a free flowing white powder.
¹H NMR (CDCl₃): δ 6.83 (s, 2H, 2,4,6-Me₃C₆H₂), 4.19 (d, ²JHH = 0.8Hz, 1H, OC(=C*H*H)Ar'), 3.70 (d, ²J_{HH} = 0.9Hz, 1H, OC(=CH*H*)Ar'), 3.70 (s, br, B*H*), 2.47 (s, 6H, mesityl *o-CH*_{*3*}*),* 2.35 (s, 9H, HB{C₃N₂H(CH₃)₂}), 2.26 (s, 3H, mesityl *p*-*CH*₃), 2.22 (s, 9H, HB{C₃N₂H(C*H*₃)₂})

### Example 15

### Use of {HB(3,5-Me₂C₃N₂H)₃}Mg(OC(=CH₂)-2,4,6-Me₃C₆H₂) [6] as an MMA polymerisation initiator

0.0080g {HB(3,5-Me₂C₃N₂H)₃}Mg(OC(=CH₂)-2,4,6-Me₃C₆H₃) (1.66 x 10⁻⁵mol) was dissolved in 2 cm³ toluene and chilled to -30°C. To this solution was added a 1 cm³ toluene solution of MMA (0.3360g, 3.36 x 10⁻³mol, 202 equivalents) and the reaction was stirred for 2 hours at -30°C.
Mₙ = 31,100 (calc = 20,200), M_{w}/Mₙ = 1.52
Triad analysis (by ¹HNMR): 14.5% mm: 20.5% rm : 65.0% rr

Various modifications and variations of the described methods of the invention will be apparent to those skilled in the art without departing from the scope and spirit of the invention. Although the invention has been described in connection with specific preferred embodiments, various modifications of the described modes for carrying out the invention which are obvious to those skilled in chemistry or related fields are intended to be within the scope of the following claims.

## Claims

1. A complex of formula I 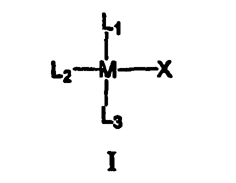 wherein
M is Ca, Mg, Ba or Sr;
L₁ is selected from R¹O, R²S, R³R⁴N, R⁵R⁶P, a substituted or unsubstituted cyclopentadienide and a substituted or unsubstituted pyrazolyl group, where R¹⁻⁶ are each independently H or hydrocarbyl;
L₂ is selected from R⁷R⁸O, R⁷R⁸S, R⁷R⁸R⁹N, R⁷R⁸C=NR⁹, PR⁷R⁸R⁹, or a substituted or unsubstituted heterocycle containing one or more O, N or S atoms, where R⁷⁻⁹ are each independently H or a hydrocarbyl group;
L₃ is a neutral ligand as defined for L₂, wherein L₃ may be the same or different to L₂; and wherein L₁, L₂ and L₃ are linked to form a tridentate ligand; and
X is an alkyl group, an aryl group, an amide group, an aryloxide or an enolate group of formula R¹⁰R¹¹C=CR¹²O-, wherein R¹⁰⁻¹² are each independently H or hydrocarbyl.

2. A complex according to claim 1 wherein R¹ and R² are hydrocarbyl, and R³⁻⁶ are H or hydrocarbyl.

3. A complex according to claim 1 wherein R¹ and R² are each independently selected from branched or unbranched alkyl, branched or unbranched alkenyl, or aryl, each of which may be substituted or unsubstituted.

4. A complex according to claim 1 wherein L₁, L₂ and L₃ are linked to form a tridentate ligand selected from a beta-diketiminate with a pendant donor group, and a Schiffbase derivative with a pendant donor arm.

5. A complex according to claim 4 of formula VI 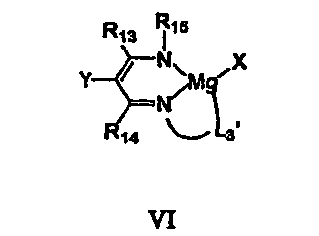 wherein Y is H, hydrocarbyl or CN; R¹³⁻¹⁵ are each independently selected from H and hydrocarbyl; or Y and R¹³ are linked to form a hydrocarbyl group; L₃ is defined as for L₃ in claim 1, and is linked to the nitrogen of the bidentate ligand via a linker group.

6. A complex according to claim 4 wherein said complex is of formula VII 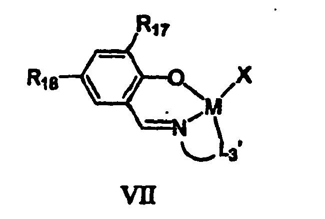 wherein L₃' is defined as for L₃ in claim 1, and is linked to the nitrogen of the bidentate ligand via a linker group, and R¹⁷⁻¹⁸ are each independently selected from H and hydrocarbyl.

7. A complex according to claim 5 or claim 6 wherein the linker group is (CH₂)ₙ where n is 0-6, an arylene group, or SiR₂, where R is hydrocarbyl,

8. A complex according to claim 1 of formula X 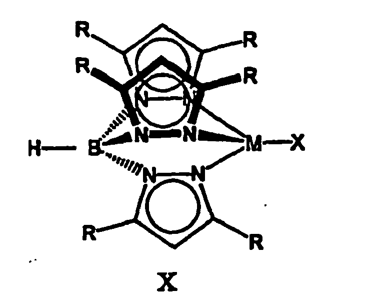 wherein each R is independently H or a hydrocarbyl group.

9. A compound according to any preceding claim wherein X is an alkyl group

10. A compound according to claim 9 wherein X is ⁱPr.

11. A compound according to any one of claims 1 to 8 wherein X is an amide group.

12. A compound according to claim 11 wherein X is NPrⁱ₂.

13. A compound according to any one of claims 1 to 8 wherein X is an enolate group of formula R¹⁰R¹¹C=CR¹²O-, wherein R¹⁰ and R¹¹ are H and R¹² is an aryl group.

14. A compound according to claim 13 ,wherein X is -OC (=CH₂)Ar, wherein Ar is 2,4,6,-Me₃C₆H₂.

15. A complex comprising a dimer of a complex according to any preceding claim.

16. A complex according to claim 1 selected from the following:
{HC(C(Me)=N-2,6-ⁱPr₂C₆H₃)(C(Me)=N-2-OMeC₆H₄)}MgⁱPr [5]; and
(HB(3,5-Me₂C₃N₂H)₃)Mg(OC(=CH₂)-2,4,6-Me₃C₆H2) [6];

17. Use of a complex of formula la as a polymerisation initiator, 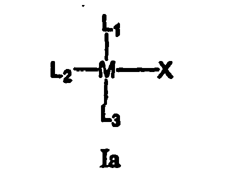 wherein
M is Ca, Mg, Ba or **Sr,**
L₁ is selected from R¹O, R²S, R³R⁴N, R⁵R⁶P, a substituted or unsubstituted cyclopentadienide, and a substituted or unsubstituted pyrazolyl group, where R¹⁻⁶ are each independently H or hydrocarbyl;
L₂ is selected from R⁷R⁸O, R⁷R⁸S, R⁷R⁸R⁹N, R⁷R⁸C=NR⁹, PR⁷R⁸R⁹, and a substituted or unsubstituted heterocycle containing one or more 0, N or S atoms, where R⁷⁻⁹ are each independently H or a hydrocarbyl group;
L₃ is a neutral ligand as defined for wherein L₃ may be the same or different to L₂; and wherein L₁, L₂ and L₃ are linked to form a tridentate ligand; and
X is an alkyl group, an aryl group, an amide group, or an enolate group of formula R¹⁰R¹¹C=CR¹²O-, wherein R¹⁰⁻¹² are each independently H or hydrocarbyl.

18. Use according to claim 17 in the polymerisation of acrylate and/or alkyl acrylate monomers.

19. Use according to claim 17 or 18 which further comprises the use of a chain transfer reagent.

20. A process for the polymerisation of acrylate and/or alkylacrylate monomers, said process comprising contacting an initiating amount of a complex of formula Ia as defined in claim 17 with an acrylate and/or an alkylacrylate monomer in the presence of a suitable solvent.

21. A process according to claim 20 wherein the ratio of monomer to the complex is between 10:1 and 10⁶:1.

22. An article prepared by a process according to claims 20 or 21.

23. A composition comprising an acrylate and/or an alkylacrylate monomer and a complex of formula Ia as defined in claim 17.

24. A composition comprising poly(alkylacrylate) and poly(alkylmethacryate) or copolymers thereof, and a complex of formula Ia as defined in claim 17.

25. A method for producing polymethacrylate having greater than 75% syndiotacticity, said method comprising contacting methacrylate monomer with a complex of formula la as defined in claim 17 in the presence of a suitable solvent.

26. A method according to claim 25 which is carried out at a temperature in excess of -40°C.

## Patentansprüche

1. Komplex der Formel I 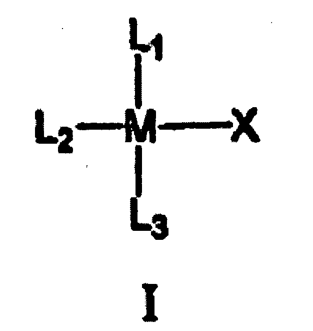 wobei
M Ca, Mg, Ba oder Sr ist,
L₁ unter R¹O, R²S, R³R⁴N, R⁵R⁶P, einem substituierten oder unsubstituierten Cyclopentadienid und einer substituierten oder unsubstituierten Pyrazolylgruppe ausgewählt ist, wobei R¹⁻⁶ jeweils unabhängig voneinander H oder Hydrocarbyl sind,
L₂ unter R⁷R⁸O, R⁷R⁸S, R⁷R⁸R⁹N, R⁷R⁸C=NR⁹, PR⁷R⁸R⁹ oder einem substituierten oder unsubstituierten Heterozyklus ausgewählt ist, der ein oder mehrere O-, N- oder S-Atome enthält, wobei R⁷⁻⁹ jeweils unabhängig voneinander H oder eine Hydrocarbylgruppe sind,
L₃ ein neutraler Ligand ist, der wie für L₂ definiert ist, wobei L₃ der gleiche wie L₂ oder davon verschieden sein kann, und wobei L₁, L₂ und L₃ unter Bildung eines dreizähnigen Liganden miteinander verbunden sind, und
X eine Alkylgruppe, eine Arylgruppe, eine Amidgruppe, eine Aryloxid- oder eine Enolatgruppe der Formel R¹⁰R¹¹C=CR¹²O- ist, wobei R¹⁰⁻¹² jeweils unabhängig voneinander H oder Hydrocarbyl sind.

2. Komplex nach Anspruch 1, wobei R¹ und R² Hydrocarbyl sind und R³⁻⁶ H oder Hydrocarbyl sind.

3. Komplex nach Anspruch 1, wobei R¹ und R² jeweils unabhängig voneinander ausgewählt sind unter verzweigtem oder unverzweigtem Alkyl, verzweigtem oder unverzweigtem Alkenyl oder Aryl, die jeweils substituiert oder unsubstituiert sein können.

4. Komplex nach Anspruch 1, wobei L₁, L₂ und L₃ miteinander verbunden sind unter Bildung eines dreizähnigen Liganden, ausgewählt unter einem Beta-Diketiminat mit einer angehängten Donorgruppe und einem Derivat einer Schiff-Base mit einem angehängten Donorarm.

5. Komplex nach Anspruch 4 mit der Formel VI 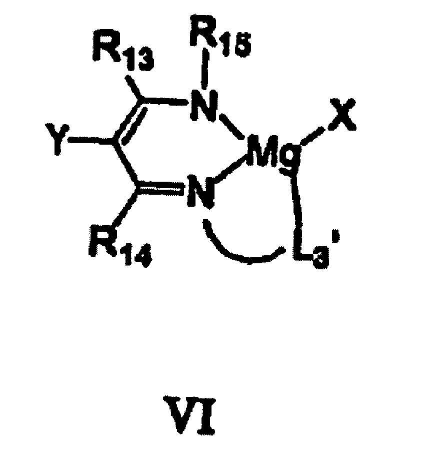 wobei Y H, Hydrocarbyl oder CN ist, R¹³⁻¹⁵ jeweils unabhängig voneinander unter H und Hydrocarbyl ausgewählt sind oder Y und R¹³ unter Bildung einer Hydrocarbylgruppe miteinander verbunden sind, L₃' wie in Anspruch 1 für L₃ definiert ist und über eine Linkergruppe mit dem Stickstoff des zweizähnigen Liganden verbunden ist.

6. Komplex nach Anspruch 4, wobei der Komplex die Formel VII hat 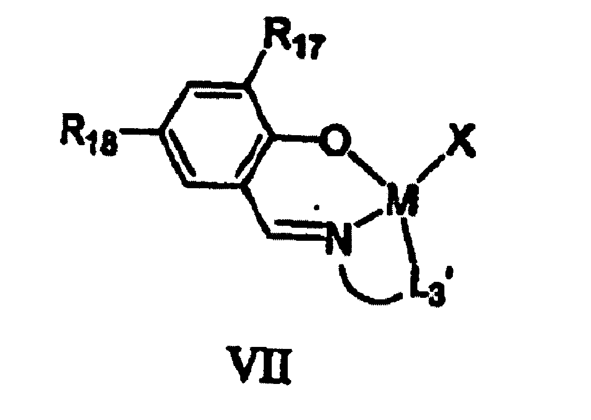 wobei L₃ wie in Anspruch 1 für L₃ definiert ist und über eine Linkergruppe mit dem Stickstoff des zweizähnigen Liganden verbunden ist, und R¹⁷⁻¹⁸ jeweils unabhängig voneinander unter H und Hydrocarbyl ausgewählt sind.

7. Komplex nach Anspruch 5 oder Anspruch 6, wobei die Linkergruppe (CH₂)ₙ ist, wobei n 0-6, eine Arylengruppe oder SiR₂ ist, wobei R Hydrocarbyl ist.

8. Komplex nach Anspruch 1 mit der Formel X 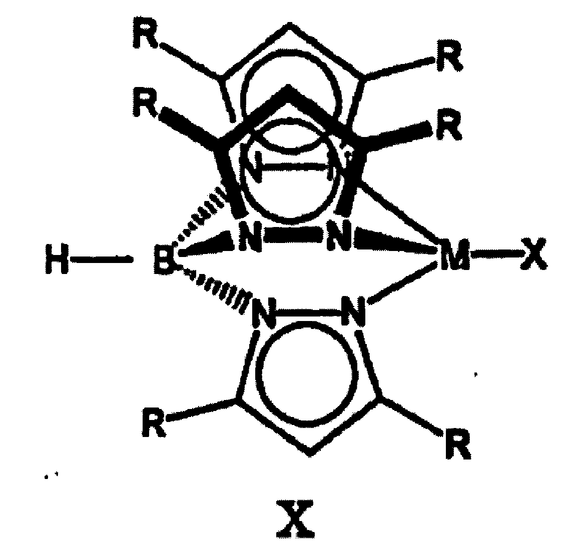 wobei jeder R unabhängig voneinander H oder eine Hydrocarbylgruppe ist.

9. Verbindung nach einem der vorangegangenen Ansprüche, wobei X eine Alkylgruppe ist.

10. Verbindung nach Anspruch 9, wobei X ⁱPr ist.

11. Verbindung nach einem der Ansprüche 1 bis 8, wobei X eine Amidgruppe ist.

12. Verbindung nach Anspruch 11, wobei X NPrⁱ₂ ist.

13. Verbindung nach einem der Ansprüche 1 bis 8, wobei X eine Enolatgruppe der Formel R¹⁰R¹¹C=CR¹²O- ist, wobei R¹⁰ und R¹¹ H sind und R¹² eine Arylgruppe ist.

14. Verbindung nach Anspruch 13, wobei X -OC(=CH₂)Ar ist, wobei Ar 2,4,6-Me₃C₆H₂ ist.

15. Komplex, welcher ein Dimer eines Komplexes nach einem der vorangegangenen Ansprüche umfaßt.

16. Komplex nach Anspruch 1, ausgewählt unter den folgenden:
{HC(C(Me)=N-2,6-ⁱPr₂C₆H₃)(C(Me)=N-2-OMeC₆H₄)}MgⁱPr **[5]** und
{HB(3,5-Me₂C₃N₂H)₃}Mg(OC(=CH₂)-2,4,6-Me₃C₆H₂) **[6]**.

17. Verwendung eines Komplexes der Formel la als ein Polymerisationsinitiator 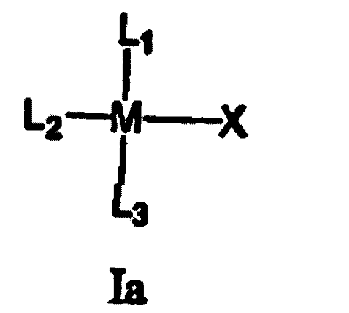 wobei
M Ca, Mg, Ba oder Sr ist,
L₁ unter R¹O, R²S, R³R⁴N, R⁵R⁶P, einem substituierten oder unsubstituierten Cyclopentadienid und einer substituierten oder unsubstituierten Pyrazolylgruppe ausgewählt ist, wobei R¹⁻⁶ jeweils unabhängig voneinander H oder Hydrocarbyl sind,
L₂ unter R⁷R⁸O, R⁷R⁸S, R⁷R⁸R⁹N, R⁷R⁸C=NR⁹, PR⁷R⁸R⁹ oder einem substituierten oder unsubstituierten Heterozyklus ausgewählt ist, der ein oder mehrere O-, N- oder S-Atome enthält, wobei R⁷⁻⁹ jeweils unabhängig voneinander H oder eine Hydrocarbylgruppe sind,
L₃ ein neutraler Ligand ist, der wie für L₂ definiert ist, wobei L₃ der gleiche wie L₂ oder davon verschieden sein kann, und wobei L₁, L₂ und L₃ unter Bildung eines dreizähnigen Liganden miteinander verbunden sind, und
X eine Alkylgruppe, eine Arylgruppe, eine Amidgruppe oder eine Enolatgruppe der Formel R¹⁰R¹¹C=CR¹²O- ist, wobei R¹⁰⁻¹² jeweils unabhängig voneinander H oder Hydrocarbyl sind.

18. Verwendung nach Anspruch 17 bei der Polymerisation von Acrylat- und/oder Alkylacrylatmonomeren.

19. Verwendung nach Anspruch 17 oder 18, welche weiterhin die Verwendung eines Ketten-übertragungsreagens umfaßt.

20. Verfahren für die Polymerisation von Acrylat- und/oder Alkylacrylatmonomeren, wobei das Verfahren umfaßt, daß man eine initiierende Menge eines Komplexes der Formel la, wie er in Anspruch 17 definiert ist, in Gegenwart eines geeigneten Lösungsmittels mit einem Acrylat- und/oder Alkylacrylatmonomer in Kontakt bringt.

21. Verfahren nach Anspruch 20, wobei das Verhältnis von Monomer zu Komplex zwischen 10:1 und 10⁶:1 liegt.

22. Gegenstand, hergestellt durch ein Verfahren nach einem der Ansprüche 20 oder 21.

23. Zusammensetzung, welche ein Acrylat- und/oder ein Alkylacrylatmonomer und einen Komplex der Formel la, wie er in Anspruch 17 definiert ist, umfaßt.

24. Zusammensetzung, welche Polyalkylacrylat und Polyalkylmethacrylat oder Copolymere davon und einen Komplex der Formel la, wie er in Anspruch 17 definiert ist, umfaßt.

25. Verfahren zur Herstellung von Polymethacrylat mit einer Syndiotaktizität von mehr als 75%, wobei das Verfahren umfaßt, daß man Methacrylatmonomer in Gegenwart eines geeigneten Lösungsmittels mit einem Komplex der Formel Ia, wie er in Anspruch 17 definiert ist, in Kontakt bringt.

26. Verfahren nach Anspruch 25, welches bei einer Temperatur von mehr als -40°C ausgeführt wird.

## Revendications

1. Complexe de formule I 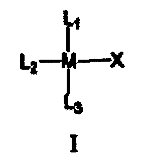 dans laquelle
M représente Ca, Mg, Ba ou Sr ;
L₁ est choisi entre R¹O, R²S, R³R⁴N, R⁵R⁶P, un cyclopentadiénure substitué ou non substitué et un groupe pyrazolyle substitué ou non substitué, dans lesquels R¹ à R⁶ représentent chacun indépendamment H ou un groupe hydrocarbyle ;
L₂ est choisi entre R⁷R⁸O, R⁷R⁸S, R⁷R⁸R⁹N, R⁷R⁸C=NR⁹, PR⁷R⁸R⁹ ou un hétérocycle, substitué ou non substitué, contenant un ou plusieurs atomes de O, N ou S, dans lesquels R⁷ à R⁹ représentent chacun indépendamment H ou un groupe hydrocarbyle ;
L₃ représente un ligand neutre tel que défini pour L₂, L₃ pouvant être identique à ou différent de L₂ ; et dans laquelle
L₁, L₂ et L₃ sont liés pour former un ligand tridenté ; et
X représente un groupe alkyle, un groupe aryle, un groupe amide, un groupe aryloxyde ou un groupe énolate de formule R¹⁰R¹¹C=CR¹²O-, dans lequel R¹⁰ à R¹² représentent chacun indépendamment H ou un groupe hydrocarbyle.

2. Complexe suivant la revendication 1, dans lequel R¹ et R² représentent des groupes hydrocarbyle, et R³ à R⁶ représentent H ou des groupes hydrocarbyle.

3. Complexe suivant la revendication 1, dans lequel R¹ et R² sont choisis chacun indépendamment entre un groupe alkyle ramifié ou non ramifié, un groupe alcényle ramifié ou non ramifié ou un groupe aryle, chacun d'eux pouvant être substitué ou non substitué.

4. Complexe suivant la revendication 1, dans lequel L₁, L₂ et L₃ sont liés pour former un ligand tridenté choisi entre un bêta-dicétiminate avec un groupe donneur appendu, et un dérivé de base de Schiff avec un groupe donneur appendu.

5. Complexe suivant la revendication 4, de formule VI 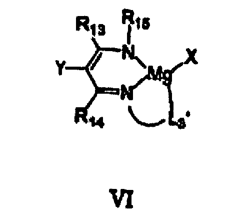 dans laquelle Y représente H, un groupe hydrocarbyle ou CN ; R¹³ à R¹⁵ sont choisis chacun indépendamment entre H et un groupe hydrocarbyle ; ou bien Y et R¹³ sont liés pour former un groupe hydrocarbyle ; L₃' est défini comme pour L₃ dans la revendication 1, et est lié à l'atome d'azote du ligand bidenté par un groupe de liaison.

6. Complexe suivant la revendication 4, ledit complexe répondant à la formule VII 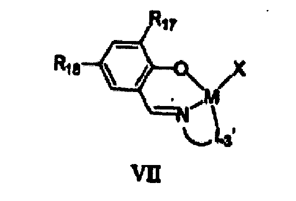 dans laquelle L₃' est défini comme pour L₃ dans la revendication 1, et est lié à l'atome d'azote du ligand bidenté par un groupe de liaison, et R¹⁷ et R¹⁸ sont choisis chacun indépendamment entre H et un groupe hydrocarbyle.

7. Complexe suivant la revendication 5 ou la revendication 6, dans lequel le groupe de liaison est un groupe (CH₂)ₙ dans lequel n a une valeur de 0 à 6, un groupe arylène ou un groupe SiR₂, dans lequel R représente un groupe hydrocarbyle.

8. Complexe suivant la revendication 1, de formule X 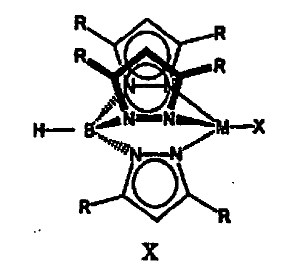 dans laquelle chaque groupe R représente indépendamment H ou un groupe hydrocarbyle.

9. Composé suivant l'une quelconque des revendications précédentes, dans lequel X représente un groupe alkyle.

10. Composé suivant la revendication 9, dans lequel X représente un groupe ⁱPr.

11. Composé suivant l'une quelconque des revendications 1 à 8, dans lequel X représente un groupe amide.

12. Composé suivant la revendication 11, dans lequel X représente un groupe NPrⁱ₂.

13. Composé suivant l'une quelconque des revendications 1 à 8, dans lequel X représente un groupe énolate de formule R¹⁰R¹¹C=CR¹²O-, dans lequel R¹⁰ et R¹¹ représentent H et R¹² représente un groupe aryle.

14. Composé suivant la revendication 13, dans lequel X représente un groupe -OC(=CH₂)Ar, dans lequel Ar représente un groupe 2,4,6-Me₃C₆H₂.

15. Complexe comprenant un dimère d'un complexe suivant l'une quelconque des revendications précédentes.

16. Complexe suivant la revendication 1, choisi parmi les suivants :
{HC(C(Me)=N-2,6-ⁱPr₂C₆H₃) (C(Me)=N-2-OMeC₆H₄) }MgⁱPr [5] et
{HB (3,5-Me₂C₃N₂H)₃}Mg (OC (=CH₂) -2,4,6-Me₃C₆H₂) [6].

17. Utilisation d'un complexe de formule Ia comme initiateur de polymérisation 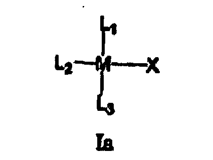 formule dans laquelle
M représente Ca, Mg, Ba ou Sr ;
L₁ est choisi entre R¹O, R²S, R³R⁴N, R⁵R⁶P, un cyclopentadiénure substitué ou non substitué et un groupe pyrazolyle substitué ou non substitué, dans lesquels R¹ à R⁶ représentent chacun indépendamment H ou un groupe hydrocarbyle ;
L₂ est choisi entre R⁷R⁸O, R⁷R⁸S, R⁷R⁸R⁹N, R⁷R⁸C=NR⁹, PR⁷R⁸R⁹ et un hétérocycle, substitué ou non substitué, contenant un ou plusieurs atomes de O, N ou S, dans lesquels R⁷ à R⁹ représentent chacun indépendamment H ou un groupe hydrocarbyle ;
L₃ représente un ligand neutre tel que défini pour L₂, L₃ pouvant être identique à ou différent de L₂ ; et dans laquelle
L₁, L₂ et L₃ sont liés pour former un ligand tridenté ; et
X représente un groupe alkyle, un groupe aryle, un groupe amide ou un groupe énolate de formule R¹⁰R¹¹C=CR¹²O-, dans lequel R¹⁰ à R¹² représentent chacun indépendamment H ou un groupe hydrocarbyle.

18. Utilisation suivant la revendication 17, dans la polymérisation de monomères acrylate et/ou alkylacrylate.

19. Utilisation suivant la revendication 17 ou 18, qui comprend en outre l'utilisation d'un réactif de transfert de chaîne.

20. Procédé pour la polymérisation de monomères acrylate et/ou alkylacrylate, ledit procédé comprenant la mise en contact d'une quantité, servant d'initiateur, d'un complexe de formule Ia tel que défini dans la revendication 17 avec un monomère acrylate et/ou alkylacrylate en présence d'un solvant convenable.

21. Procédé suivant la revendication 20, dans lequel le rapport du monomère au complexe est compris dans l'intervalle de 10:1 à 10⁶:1.

22. Article préparé par un procédé suivant la revendication 20 ou 21.

23. Composition comprenant un acrylate et/ou un monomère alkylacrylate et un complexe de formule Ia tel que défini dans la revendication 17.

24. Composition comprenant un poly(acrylate d'alkyle) et le poly(méthacrylate d'alkyle) ou leurs copolymères, et un complexe de formule Ia tel que défini dans la revendication 17.

25. Procédé pour la production d'un polyméthacrylate comprenant plus de 75 % de syndiotacticité, ledit procédé comprenant la mise en contact d'un monomère méthacrylate avec un complexe de formule Ia tel que défini dans la revendication 17 en présence d'un solvant convenable.

26. Procédé suivant la revendication 25, qui est mis en oeuvre à une température supérieure à -40°C.
